# EUROPEAN PATENT SPECIFICATION

(11) **EP 1 881 689 B1**
(45) Date of publication and mention of the grant of the patent: **02.06.2010**
(21) Application number: 07702308.3
(22) Date of filing: 08.02.2007
(51) Int. Cl.: H04L 29/06, H04M 15/00

(54) **A METHOD AND DEVICE FOR PERCEIVING THE USER TRIGGERING A SUPPLEMENTARY SERVICE**
VERFAHREN ZUR LENKUNG DER AUFMERKSAMKEIT AUF EINEN ZUSÄTZLICHEN DIENST, STEUEREINHEIT FÜR SPRACHANRUFKONTINUITÄTSDIENST UND STEUEREINHEIT FÜR MEDIENGATEWAY
PROCÉDÉ ET DISPOSITIF PERMETTANT DE PERCEVOIR UN UTILISATEUR QUI DÉCLENCHE UN SERVICE SUPPLÉMENTAIRE

(30) Priority: 29.04.2006 CN 200610079107; 28.07.2006 CN 200610099533
(43) Date of publication of application: 23.01.2008
(73) Proprietor: Huawei Technologies Co., Ltd., Shenzhen, Guangdong Province 518129 (CN)
(72) Inventor: XU, Jie, Guangdong Province 518129 (CN); ZHU, Dongming, Guangdong Province 518129 (CN)
(74) Representative: Aufhauser, Christoph
(86) International application number: PCT/CN2007/000435
(87) International publication number: WO 2007/124641

(56) References cited:
- WO-A2-99/34612
- CN-A- 1 283 358
- 3GPP SA WG2: "Voice Call Continuity between CS and IMS Study (3GPP TR 23.806 version 7.0.0 Release 7)" 3GPP TR 23.806 V7.0.0, XX, XX, 1 December 2005 (2005-12-01), pages 1-153, XP002385067
- 3GPP: "Report on alternative architectures for combining CS Bearers with IMS; Release 6" 3RD GENERATION PARTNERSHIP PROJECT (3GPP); TECHNICAL REPORT (TR), XX, XX, vol. 23.899, no. V1.2.0, 1 June 2005 (2005-06-01), pages 1-55, XP002432033

## Description

This application claims the priorities of Chinese Patent Application No. 200610079107.5 filed on April 29, 2006, titled "METHOD AND DEVICE FOR MAKING AWARENESS OF OCCURRENCE OF A SUPPLEMENTARY SERVICE OF A USER", and Chinese Patent Application No. 200610099533.5 filed on July 28, 2006, titled "METHOD AND DEVICE FOR MAKING AWARENESS OF OCCURRENCE OF A SUPPLEMENTARY SERVICE OF A USER".

### Field of the Invention

The present invention relates to the field of wireless communications, in particular, to a method and a device for making awareness of occurrence of a supplementary service.

### Background of the Invention

While wireless network evolves from 2G network to 3G network, the 2G network will coexist with the 3G network for a very long time. In view of such a case, the interoperability between the 2G network and the 3G network are drawing people's attention. Network side has to make awareness of the registration state of a user on the two networks, so that an appropriate network may be selected for routing when a call is to be connected to the user. In addition, the network side has to anchor all the calls of a user, so as to perform auxiliary control when the user is handed off between the two networks.

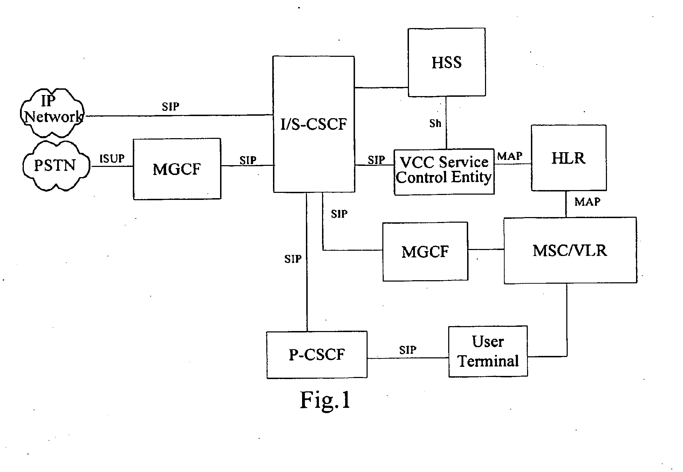

To meet the above mentioned requirements of the network side, both of Third Generation Partnership Projects (3GPP) and 3GPP2 have constituted a network architecture including an Internet Protocol Multimedia Subsystem (IMS)-based network entity. The IMS-based network entity is designed for anchoring control, and for detecting the registration and session state of a user on the two networks, and controlling the routing and handover of a call of the user based on the registration and session state of the user. Fig. 1 shows the network architecture constituted by 3GPP2.

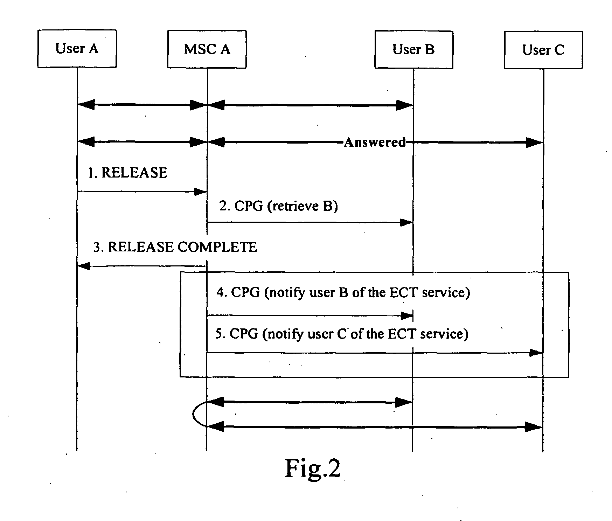

As shown in Fig. 2, each Call Server Control Function (CSCF) and a Home Subscriber Server (HSS) are IMS-domain devices, a Home Location Register (HLR) and a Mobile Services switching Center/Visited Location Register (MSC/VLR) are Circuit Switched-domain (CS-domain) devices, and a Media Gateway Control Function (MGCF) is a gateway for connection between the CS domain and the IMS domain. In this network architecture, a network element, i.e., Voice Call Continuity Application Server (VCC) service control entity, is added between the IMS domain and the CS domain. The VCC service control entity has interfaces at both of the two domains. The VCC service control entity may have the following functions of:
1. serving as an Application Server (AS) in the IMS domain, using a standard IMS service control (ISC) interface in communication with an Inquiring Call Session Control Function (I-CSCF) or a Serving Call Session Control Function (S-CSCF), and using a standard Sh interface in communication with the HSS;
2. using a standard Mobile Application Part (MAP) interface to the CS-domain entity HLR, where the VCC service control entity is a Gateway Mobile Switch Center (GMSC) in the view of the HLR;
3. recording the registration state and the call state of a user on the two networks;
4. anchoring in the call path of a user;
5. making route decision according to the registration state and the call state of the user in a called process;
6. controlling a call during a hand off across the networks.

At present, various supplementary services may be implemented in the CS domain. An example is Explicit Call Transfer (ECT) service, also referred to as Call Transfer (CT) service. The process of the call transfer service is as follows: when a user A who has subscribed the ECT service are in conversation with a user B, the user A may first arrange the user B in a call hold state and then call a user C. The user A may release the call when the user C is alerted or after the user C is connected. At this time, the network will connect the user B with the user C so that the conversation is continued between the user B and the user C, while the user A may quit the call and become idle. The different occasions for the user A to release the call will be described below:
I. The user A releases the call after the user C is connected. At this time, the user A has established a call with each of the user B and the user C, while the call between the user A and the user B is held temporarily. The subsequent process may be as follows as shown in Fig. 2:
   1. The user A sends a RELEASE (call release) message to an MSC A, and initiates a request for invoking the ECT service.
   2. The MSC A initiates a CPG (Call Progress) notification to the user B for retrieving the call.
   3. The MSC A sends a RELEASE COMPLETE (call release complete) message to the user A, releases the call with the user A, and connects the user B with the user C.
   4. If the user A has subscribed an ECT notification service, the MSC A has to send a notification message to the user B notifying the user B of the ECT service and the number of the user C. The notification message is usually a CPG (Call Progress) message including a parameter, i.e., Generic notification indicators, for indicating that an ECT service has occurred and that whether the user C is in an alerted state or an answering state. This message further includes a parameter, i.e., Call transfer number, for carrying the number of the user C.
   5. Similarly, the MSC A also sends a notification message to the user C.
   Finally, the MSC A, to which the user A pertains, will establish a call between the user B and the user C.
II. The user A releases the call when the user C is alerted.

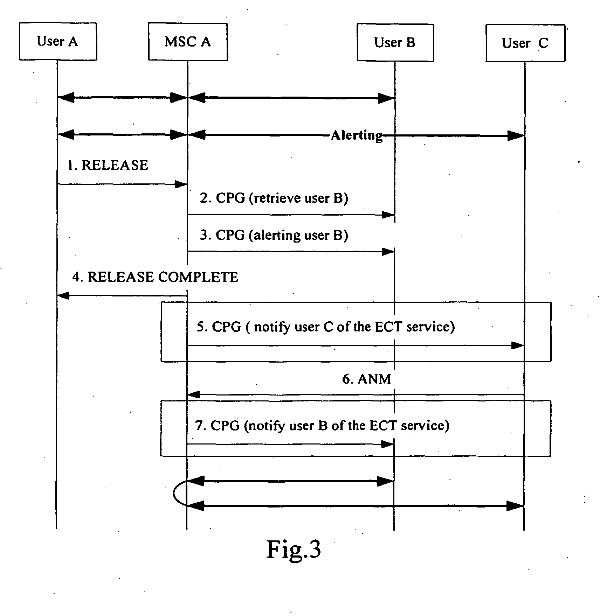

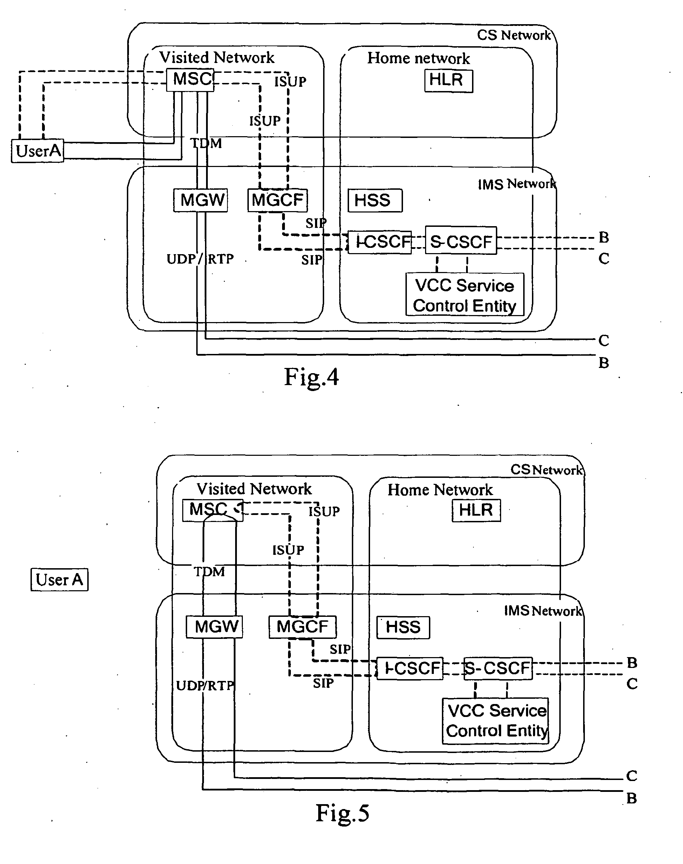

At this time, the user A has established a call with each of the user B and the user C, while the call between the user A and the user B is held temporarily. As shown in Fig. 3, the subsequent process is similar with the above process in which an ECT service is invoked after the user C is connected, with a difference in that the user B is indicated of the alerted state and a ring back tone is played to the user B (step 3), and the user B will get a notification about connection after the user C is connected (step 6), thus the ECT service is completed. According to the above network architecture (containing a VCC service control entity) and the process for implementing the ECT service, the routing state of network before the ECT service is performed (that is, when the user A establishes a call with the user B and the user C respectively) may be as shown in Fig.4. The user A is connected, on both of the signaling plane and the bearer plane, with the user B and the user C respectively, while the VCC service control entity anchors in two call signaling paths (i.e., the call signaling path between the user A and the user B, and the call signaling path between user A and user C) respectively, and records the registration states and the call states of the users A, B and C in the two networks.

Fig.5 shows the network routing state after the ECT service is completed (i.e., the user A becomes idle, and a call is established between the user B and the user C). The connections on the signaling plane and the bearer plane between the user B and the user C are still controlled and connected by the original MSC, while the VCC service control entity still anchors in the call signaling path including the user A, and gets no notification. At the same time, no change occurs in the call state of the user A recorded by the VCC service control entity. Moreover, the user B and the user C will not receive a notification that user A has performed the ECT service.

The specification of the 3rd Generation Partnership Project; Technical Specification Group Services and System Aspects titled "Voice Call Continuity between CS and IMS Study (Release 7)" (3GPP TR 23.806 version 7.0.0), proposes a number of alternative architectural solutions that enable Voice Call Continuity between CS and IMS domains, including Original Domain Controlled and IMS controlled Static Anchoring.

At present, when a call is anchored by an IMS domain VCC service control entity and then connected in the CS domain, the VCC service control entity is required to allocate a CS domain routing number and reroute the call to the CS domain. A CS domain MSC connects the call to user in the CS domain after receiving the call.

Therefore, if a user subscribes a forwarding service and a forwarding process is triggered at a GMSC, the GMSC cannot notify the forwarding event to the VCC service control entity and the calling user. In addition, the VCC service control entity cannot correctly make awareness of the call state of user, and the calling user cannot make awareness of that the call is forwarded.

Thus, a VCC service control entity cannot make awareness of the occurrence of a supplementary service at the user side after a supplementary service is initiated by an IMS domain user, the call of which is anchored by the VCC service control entity. Even if the VCC service control entity may receive a notification message about the supplementary service, the VCC service control entity cannot update the call state and session handover capability of the user, based on the functions of the VCC service control entity presently defined. As a result, the call state and session handover capability of the user recorded in the VCC service control entity remains unchanged even if the call state of the user has changed. Subsequently, when a new call needs to be connected to the user, or when the session in which the user participates is handed over, the VCC service control entity may make a wrong decision according to the wrong information. Accordingly, the user may get a bad experience. In addition, after an IMS domain user, the call of which is anchored by the VCC service control entity, initiates a supplementary service, the two new parties of the call can not be informed of the supplementary service in the related art.

### Summary of the Invention

Embodiments of the invention provide a method for making awareness of occurrence of a supplementary service, a VCC service control entity, so as to solve the problem that the VCC service control entity is not able to make awareness of the change in the calling attribute of the user and update the record after a supplementary service is initiated by an IMS domain user, the call of which is anchored by the VCC service control entity, and the problem that the other side can not be notified about the occurrence of a supplementary service after the supplementary service is initiated by the IMS domain user, the call of which is anchored by the VCC service control entity. The method for making awareness of occurrence of a supplementary service comprises:
obtaining, from a Media Gateway Control Function or a Mobile Switching Center, a notification signaling notifying that a user of a call performs a supplementary service by a Voice Call Continuity service control entity;
making awareness of occurrence of the supplementary service according to the notification signaling; and
updating, by the Voice Call Continuity service control entity, call attribute of the user according to content of the notification signaling.

The Voice Call Continuity service control entity according to an embodiment of the invention includes: a recording unit for recording call attribute of a user, an awareness unit for identifying a notification signaling notifying that a user of a call performs a supplementary service from signaling received by the Voice Call Continuity service control entity from a Media Gateway Control Function or a Mobile Switching Center; and a resolving unit for resolving supplementary service notification content obtained from the notification signaling identified by the awareness unit and thereby triggering the recording unit to update the call attribute of the user according to the content of the notification signaling.

Optionally, the supplementary service performed by the user may be a circuit domain supplementary service. The supplementary service notification content resolved by the resolving unit may include at least one of a service type indicator or a connected user identifier.

In the method for making awareness of occurrence of a supplementary service of a user according to the embodiments of the invention, the user side may be notified.

### Brief Description of the Drawings

Fig. 1 is a schematic diagram of a network architecture constituted by 3GPP2;
Fig.2 is a flow chart showing a process that a user A releases a call after the user A connects the call to a user C in the existing ECT service;
Fig.3 is a flow chart showing the process that a user A releases a call when a user C is alerted in the existing ECT service;
Fig.4 is a schematic diagram of network routing state before a user performs the ECT service in the related art;
Fig.5 is a schematic diagram of network routing state after the ECT service is completed in the related art;
Fig.6 is a structural representation of a media gateway control entity according to an embodiment of the invention;
Fig.7 is a structural representation of a VCC service control entity according to an embodiment of the invention;
Fig.8 is a flow chart showing a first method according to an embodiment of the invention;
Fig.9 is a flow chart showing Example 1 of the first method according to the embodiment of the invention;
Fig.10 is a flow chart showing Example 2 of the first method according to the embodiment of the invention;
Fig.11 is a flow chart showing Example 3 of the first method according to the embodiment of the invention;
Fig.12 is a flow chart showing Example 4 of the first method according to the embodiment of the invention; and
Fig.13 is a flow chart showing a second method according to an embodiment of the invention.

### Detailed Description of the Embodiments

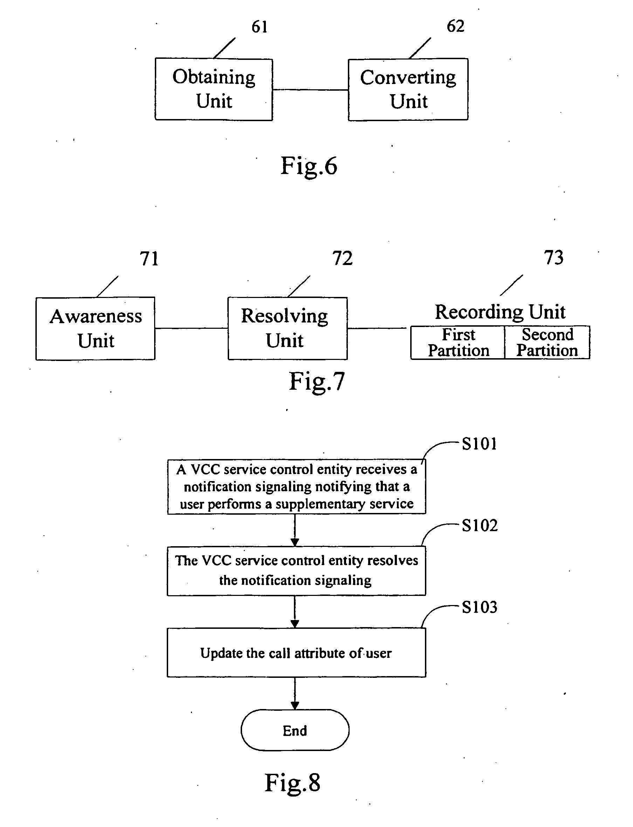

An embodiment of the invention provides a Media Gateway Control Function (MGCF). With the MGCF, a VCC service control entity may make awareness of the change in call attribute of a user of IMS domain and thereby update the call attribute of the user recorded in the VCC service control entity after the IMS domain user, the call of which is anchored by the VCC service control entity initiates a supplementary service. Consequently, when a new call needs to be connected to the user or when the session in which the user participates is handed over, the VCC service control entity may make correct routing decision or perform correct handover operation. Further, with the MGCF, the user side may be informed of the supplementary service after the supplementary service is initiated by the IMS domain user, the call of which is anchored by the VCC service control entity. The MGCF is as shown in Fig.6, which includes an obtaining unit 61 and a converting unit 62 connected with each other.

The obtaining unit 61 is adapted to receive external signaling and obtain supplementary service notification content from a trunk signaling received. From the trunk signaling, this unit may obtain only a service type indicator and/or a connected user identifier, as well as other additional information (such as a number of a new opposite end of a call in the ECT service, or a forwarded-to number in a call forwarding service).

The converting unit 62 is adapted to convert the supplementary service notification content obtained by the obtaining unit into a notification signaling in SIP (Session Initiation Protocol) format notifying that a user performs a supplementary service, and send the notification signaling to the user side. Accordingly, the notification signaling includes at least a service type indicator and/or a connected user identifier, and may also include a number of a new opposite end of a call or a call forwarded-to number, etc.

An embodiment of the invention further provides a VCC (Voice Call Continuity) service control entity as shown in Fig.7, which includes an awareness unit 71, a resolving unit 72 and a recording unit 73 which are concatenated.

The awareness unit 71 is adapted to identify a notification signaling notifying that a user performs a supplementary service from signaling received by the VCC service control entity. The notification signaling includes, but is not limited to, SIP notification signaling (sent from the MGCF according to an embodiment of the invention) and CAP (Customized Application of Mobile Enhanced Logic (CAMEL) Application Part) notification signaling (sent from an MSC).

The resolving unit 72 is adapted to resolve the supplementary service notification content obtained from the notification signaling identified by the awareness unit and thereby trigger the recording unit to update call attribute of the user. This unit utilizes different resolving strategies to resolve different types of notification signaling. The supplementary service notification content resolved includes at least a service type indicator and/or a connected user identifier. Other additional information may also be resolved (such as a number of a new opposite end of a call in an ECT service, or a forwarded-to number in forwarding service).

The recording unit 73 includes at least one of a first partition for recording the session handover capability of a user and a second partition for recording call state of a user. When only the session handover capability needs to be updated, the first partition updates the session handover capability of the user according to a service type indicator resolved by the resolving unit, and/or according to the comparison result between the connected user identifier resolved by the resolving unit and the original called number. If the connected user identifier resolved is different from the original called number, the recording unit determines that the call has been forwarded, and updates the session handover capability of the user. When both of the session handover capability and call state need updating, the first partition updates the session handover capability of the user according to the service type indicator resolved by the resolving unit, and/or according to the comparison result between the connected user identifier resolved by the resolving unit and the original called number. If the connected user identifier resolved is different from the original called number, the first partition determines that the call has been forwarded, and updates the session handover capability of the user, and triggers the second partition to update the call state recorded in the second partition. When only the call state needs updating, the second partition updates the call state of the user according to the service type indicator resolved by the resolving unit and/or the connected user identifier.

If the VCC service control entity is divided into two logic entities including a Call Continuity Control Function (CCCF) for controlling the anchoring and handover of a call and a Network Domain Selection Function (NeDS) for controlling the selection of network domain, the CCCF may function as the awareness unit, and the functions of the resolving unit and the recording unit may be disassembled in the CCCF and the NeDS. The CCCF is adapted to configure the session handover capability of a user (configure all the sessions related to the user who initiates the supplementary service as non-switch-supporting) according to the service type indicator and/or the connected user identifier, and to indicate the NeDS to update the call state of the user (modify the call state of the user initiating the supplementary service to idle state).

By using the above function entities, an embodiment of the invention provides a method for making awareness of occurrence of a supplementary service of a user. This method may be applied in a network architecture in which an IMS-based entity performs anchoring control, so that a VCC service control entity and/or a user may make awareness of the occurrence of a supplementary service. In an implementation, the VCC service control entity and/or the user obtains a notification signaling notifying that a user performs a supplementary service respectively; and the VCC service control entity and/or the user may make awareness of the occurrence of the supplementary service according to the notification signaling.

Fig.8 shows a flow chart of a method for a VCC service control entity to make awareness of occurrence of a supplementary service of a user according to an embodiment of the invention. The method may include:

S101: a VCC service control entity receives a notification signaling notifying that a user performs a supplementary service.

The user initiating a supplementary service can subscribe a supplementary notification service first, or a MSC may send a notification for each of supplementary services. The supplementary services may include, but are not limited to, ECT service, forwarding service, call hold service or call waiting service. Accordingly, the notification signaling may be a call alerting notification, or a forwarding notification, or a call answer notification.

If the supplementary service is an ECT service, a forwarding service, a call hold service or a call waiting service, the MSC (not limited to MSC) sends a trunk signaling containing supplementary service notification content to an MGCF after the user initiates the supplementary service. The MGCF obtains the supplementary service notification content contained in the trunk signaling via an obtaining unit and converts the supplementary service notification content into a notification signaling of SIP format via a converting unit. The supplementary service notification content includes at least a service type indicator and/or a connected user identifier. The MGCF sends the notification signaling to the VCC service control entity. The VCC service control entity identifies and receives the notification signaling via an awareness unit.

Alternatively, if the supplementary service is an ECT service, a call hold service or a call waiting service, the MSC may report a notification signaling of CAP format (not limited to CAP format) containing the supplementary service notification content (which includes at least the service type indicator and/or the connected user identifier) directly to the VCC service control entity after the user initiates the supplementary service, according to the subscription information of the user (supplementary service-CAMEL subscriber information, SS-CSI) and the address of the VCC service control entity indicated in the subscription information (SCP (Service Control Point) address is set as the address of the VCC service control entity). The VCC service control entity identifies and receives the notification signaling via an awareness unit.

S102: the VCC service control entity resolves the notification signaling.

The VCC service control entity resolves the notification signaling received by the awareness unit via a resolving unit, and obtains the supplementary service notification content. The supplementary service notification content includes, at least, a service type indicator and/or a connected user identifier.

S103: the VCC service control entity updates the call attribute of the user.

The resolving unit of the VCC service control entity notifies the recording unit to update the session handover capability of the user according to the service type indicator and/or the connected user identifier, and to update the call state of the user.

The method according to the embodiment of the invention will be described in detail via three examples below.

**Example 1:** in an ECT service, the MSC notifies an opposite end of a call via a CPG (Call Progress) trunk signaling.

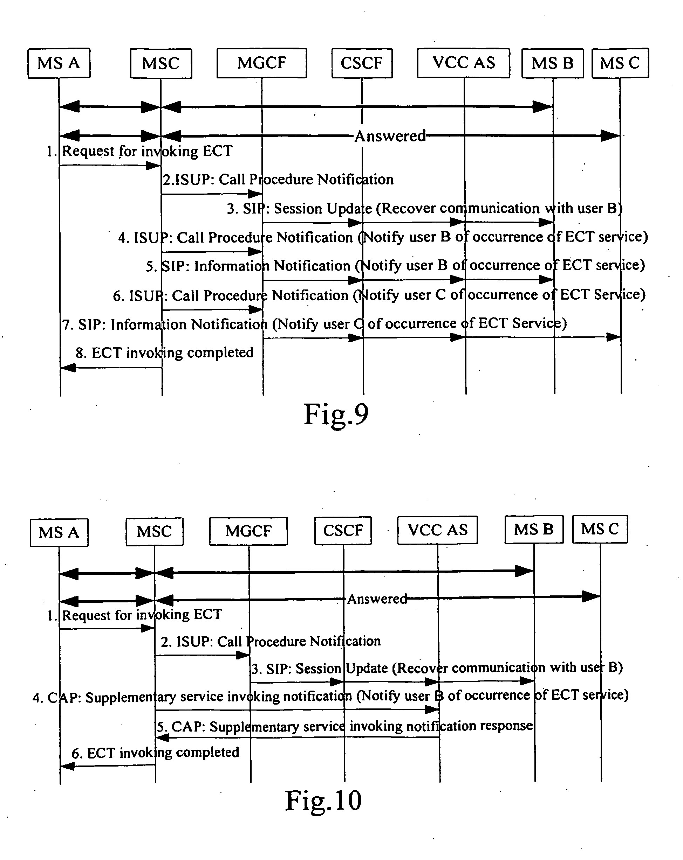

When a call between a user A of a Mobile Station (MS) A and a user B of a MS B is held, and the user A is in conversation with a user C of a MS C, the user A may initiate an ECT service. As shown in Fig.9:
1, the user A sends a request for invoking the ECT service to an MSC;
2, the MSC sends a CPG signaling to the side of the user B indicating the user B to retrieve the call;
3, an MGCF converts the CPG signaling for retrieving the call into an UPDATE message of SIP signaling, indicating to modify the direction of media flow as bidirection, and sends the UPDATE message to the terminal of the user B through a CSCF, a VCC service control entity and the network of the user B;
4, the MSC sends to the user B a CPG signaling notifying the user B of the occurrence of the ECT service, together with the number of the user C;
5, the MGCF converts the CPG signaling notifying the occurrence of the ECT service into an INFO message (or a REFER, or a MESSAGE or the like) of SIP signaling, indicating that the service event is an ECT and carrying the number of user C. The MGCF sends the INFO message to the terminal of the user B through the CSCF, the VCC service control entity and the network of the user B. In this way, the user B may make awareness of the occurrence of the ECT service and that the user C is the new opposite end. When the INFO message passes through the VCC service control entity, the VCC service control entity detects the INFO message, and removes user A from the session (i.e., the session between user A and user C), that is, configures the session as irrelevant to user A;
6 the MSC also sends a CPG signaling to the user C notifying the occurrence of the ECT service and the number of the user B;
7, the MGCF converts the CPG signaling notifying the ECT service event and the number of the user B into an INFO message (or a REFER, or a MESSAGE or the like) of SIP signaling as in step 5, and sends the INFO message to the terminal of the user C. In this way, the user C may make awareness of the occurrence of ECT service and that the user B is the new opposite end. When the INFO message passes through the VCC service control entity, the VCC service control entity detects the INFO message, and configures the session (the session between user A and user B) as irrelevant to user A. In this way, the call state of the user A becomes idle, and sessions related to the user A cannot be handed over.
8, the MSC connects the conversation between the user B and the user C, and releases the connection to the user A. This step may also be performed before step 4.

**Example 2:** in an ECT service, the MSC notifies the VCC service control entity directly in an SS-CSI intelligent triggering mode.

When a call between the user A and the user B is held, and the user A and the user C are in conversation state, the user A may initiate the ECT service. As shown in Fig.10:
1, the user A sends a request for invoking the ECT service to an MSC;
2, the MSC sends a CPG signaling to the side of the user B indicating the user B to retrieve the call;
3, an MGCF converts the CPG signaling for retrieving the call into an UPDATE message of SIP signaling, indicating to modify the direction of media flow as bidirection, and sends the UPDATE message to the terminal of the user B through a CSCF, a VCC service control entity and the network of the user B;
4, the MSC triggers the SS-CSI and sends an SS_INVOCATION_NOTIFY message to the VCC service control entity, indicating the occurrence of the ECT service;
5, the VCC service control entity returns a response message of the SS_INVOCATION_NOTIFY to the MSC after receiving the SS_INVOCATION_NOTIFY, and sets the call state of the user A as idle state, and configures both of the session between the user A and the user B and the session between the user A and the user C as irrelevant to user A. In this way, sessions related to the user A will not support handover;
6, the MSC connects the conversation between the user B and the user C, and releases the connection to the user A. This step may also be performed before step 4.

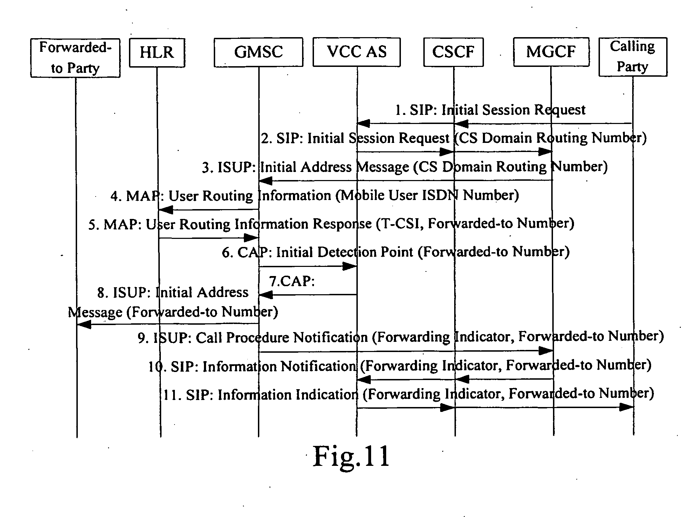

**Example 3:** in a forwarding service, a GMSC notifies a calling party via a CPG trunk signaling. As shown in Fig. 11:
1, the home IMS domain of a called user receives an initial session request sent from the calling party;
2, when determining that a session is to be routed to the circuit domain according to a strategy, the VCC service control entity returns an initial session request carrying a CS domain routing number to a CSCF. The CSCF routes the session to the MGCF after receiving the initial session request;
3, the MGCF sends an initial address message to a GMSC of the home network of the called party according to the CS domain routing number so as to establish a CS domain session;
4, the GMSC retrieves the mobile user ISDN number of the called party after receiving the initial address message, and sends a user address information message to an HSS requesting information of user location;
5, when detecting that the called party has subscribed a forwarding service, such as a Call Forwarding Unconditional service, the HSS returns a forwarded-to number and T-CSI (CAMEL Subscriber Information of the called user);
6, the GMSC triggers a CAMEL service via the T-CSI, and sends an initial detection point message carrying a forwarding indicator and the forwarded-to number, to a Service Control Point (SCP);
7, the VCC service control entity returns a continue-calling indication;
8, the GMSC reroutes to the forwarded-to party according to the forwarded-to number;
9, the GMSC sends a CPG message carrying the forwarding indicator and the forwarded-to number, to the MGCF;
10, the MGCF converts the CPG message into an SIP message, and sends the SIP message back to the calling party along a session path of the initial session request. The SIP message may be an INFO, a REFER, a MESSAGE or the like, or may be a response message such as 181 (Call Being Forwarded);
11, when obtaining this SIP message in the session path, the VCC service control entity updates the call state of the user recorded as idle state, and marks the session as being unable to be handed over. Then, the VCC service control entity sends this SIP message back to the calling party along the session path.

In a forwarding service, the MSC may notify the VCC service control entity directly in an SS-CSI intelligent triggering mode. This process may be derived from the Example 2 and the Example 3.

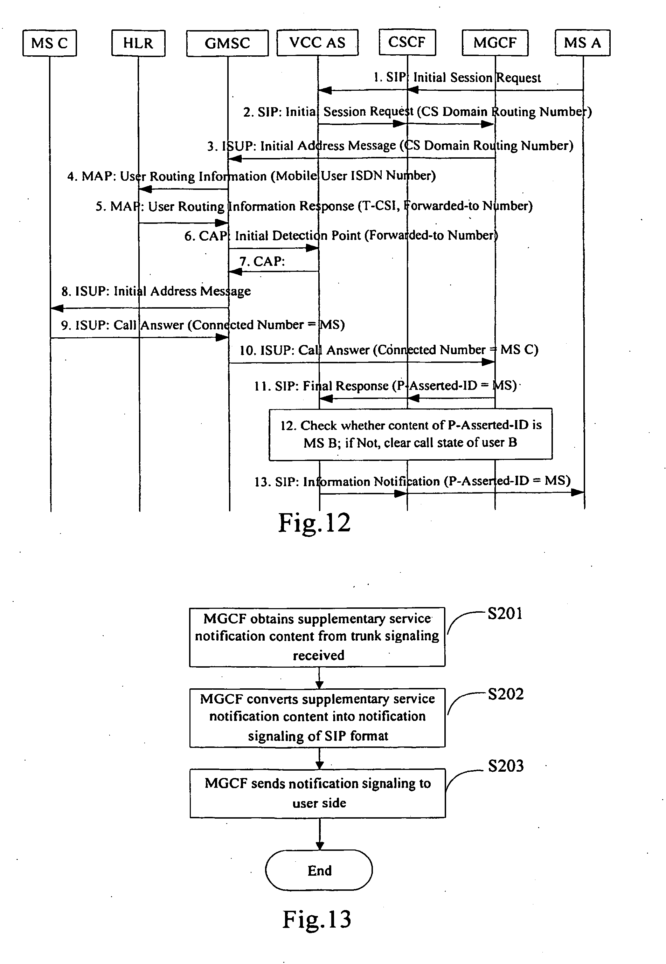

**Example 4:** in a forwarding service, the VCC service control entity may determine whether a call is forwarded according to some parameters in a received SIP session indicating the identity of an actual called party. If the call has been forwarded, the VCC service control entity may modify the call state of user recorded. As shown in Fig.12:
Step 1 to step 7 of this example are the same as those of the example 3 as shown in Fig.11.
   8, the GMSC reroutes to the forwarded-to party C, i.e., user C, according to the forwarded-to number;
   9, the forwarded-to party C returns an answer message, the parameter Connected Number contained in the answer message indicates the user C is the actual called party;
   10, the GMSC forwards the answer message to an MGCF;
   11, the MGCF returns a session final response message 200 OK to the VCC service control entity, a parameter P-Asserted-ID contained in the 200 OK indicates that the user C is the actual called party ;
   12, the VCC service control entity determines whether the content of the parameter P-Asserted-ID contained in the 200 OK is the original called user B; if not, modifies the recorded call state of the user B;
   13, the VCC service control entity returns an answer of the session response message 200 OK to the calling party.

As shown in Fig.13, a process that a user side makes awareness of the occurrence of a supplementary service after the supplementary service is initiated by an IMS domain user, the call of which is anchored by the VCC service control entity, according to an embodiment of the invention, may include:
S201: an MGCF obtains supplementary service notification content from a trunk signaling received.

After the user initiates a supplementary service (the supplementary service includes, but is not limited to, an ECT service, a forwarding service, a call hold service or a call waiting service), an MSC (not limited to MSC) sends a trunk signaling containing the supplementary service notification content to an MGCF; the MGCF obtains the supplementary service notification content contained in the trunk signaling. The supplementary service notification content includes at least a supplementary service indicator.
S202: the MGCF converts the supplementary service notification content into a notification signaling of SIP format.
S203: the MGCF sends the notification signaling to user sides respectively.

If the supplementary service is an ECT service, the MGCF transparently transmits the notification signaling to both terminals of the new parties of the call directly. The notification signaling may or may not pass through the VCC service control entity according to the embodiments of the invention.

If the supplementary service is a forwarding service, the MGCF transparently transmits the notification signaling to the calling terminal directly. The notification signaling may or may not pass through the VCC service control entity according to the embodiments of the invention.

As can be seen from the above embodiments of the invention that, in the method according to the embodiments of the invention, an MGCF converts a trunk signaling into a notification signaling of SIP format and sends the notification signaling of SIP format to a VCC service control entity; or an MSC reports a notification signaling of CAP format directly to the VCC service control entity according to the subscription information of the user. With respect to the VCC service control entity according to the embodiments of the invention, this VCC service control entity is able to not only intercept a notification signaling of SIP format or CAP format, but also resolve supplementary service notification content from the notification signaling and update the call attribute of user stored in the VCC service control entity. Thus, the call attribute of user stored in the VCC service control entity may be kept synchronous with the actual call attribute of user, so that the VCC service control entity may make a correct decision according to the correct information.

The notification signaling of SIP format may also be forwarded to user sides, so that the related users may make awareness of the occurrence of a supplementary service.

Thus, with the method according to the embodiments of the invention, a user side may make awareness of the occurrence of a supplementary service. After converting a trunk signaling into a notification signaling of SIP format, the MGCF may send the notification signaling of SIP format to a user side directly. Additional advantages and modifications may be readily recognized by a person of ordinary skill in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for making awareness of occurrence of a supplementary service, comprising:
obtaining (S101), from a Media Gateway Control Function or a Mobile Switching Center, a notification signaling notifying that a user of a call performs a supplementary service by a Voice Call Continuity service control entity;
making (S102) awareness of occurrence of the supplementary service according to the notification signaling; and
updating (S103), by the Voice Call Continuity service control entity, call attribute of the user according to content of the notification signaling.

2. The method according to claim 1, wherein, if the notification signaling is sent from the Media Gateway Control Function, obtaining the notification signaling notifying that a user performs the supplementary service by the Voice Call Continuity service control entity comprises:
converting, by the Media Gateway Control Function, a trunk signaling containing supplementary service notification content received by the Media Gateway Control Function into a notification signaling of Session Initiation Protocol format after the user initiates the supplementary service; and
sending, by the Media Gateway Control Function, the notification signaling of Session Initiation Protocol format to the Voice Call Continuity service control entity.

3. The method according to claim 2, wherein
the supplementary service is an Explicit Call Transfer service, and the supplementary service notification content comprises a number of a new opposite end of the call;
the method further comprises:
forwarding, by the Voice Call Continuity service control entity, the notification signaling of Session Initiation Protocol format to terminals of new parties of the call; and
making awareness of occurrence of the Explicit Call Transfer service by the terminals of the new parties according to the notification signaling of Session Initiation Protocol format.

4. The method according to claim 2, wherein
the supplementary service is a forwarding service, the method further comprises:
forwarding, by the Voice Call Continuity service control entity, the notification signaling of Session Initiation Protocol format to a calling terminal; and
making awareness of occurrence of the forwarding service by the calling terminal according to the notification signaling of Session Initiation Protocol format.

5. The method according to claim 1, wherein the supplementary service is an Explicit Call Transfer service, or a call hold service or a call waiting service, and before the Voice Call Continuity service control entity receives the notification signaling, the method comprises:
reporting, by the Mobile Switching Center, a notification signaling containing the supplementary service notification content directly to the Voice Call Continuity service control entity according to subscription information of the user.

6. The method according to claim 1, further comprising:
obtaining (S201), by an opposite end of the call, the notification signaling notifying that the user performs a supplementary service through the Voice Call Continuity service control entity, and
making awareness of the occurrence of the supplementary service according to the notification signaling by the opposite end.

7. The method according to claim 6, wherein the obtaining the notification signaling notifying that a user performs the supplementary service by the opposite end of the call comprises:
converting (S202), by the Media Gateway Control Function, a trunk signaling containing supplementary service notification content received by the Media Gateway Control Function to a notification signaling of Session Initiation Protocol format; and
sending (S203), by the Media Gateway Control Function, the notification signaling of Session Initiation Protocol format to user side of the opposite end of the call.

8. The method according to claim 7, wherein the supplementary service is an Explicit Call Transfer service, and the Media Gateway Control Function sends the notification signaling to terminals of new parties of the call.

9. The method according to claim 8, wherein the supplementary service notification content comprises a number of a new opposite end of the call, one of new parties of the call obtains a number of the other of the new parties according to the supplementary service notification content.

10. The method according to claim 7, wherein: the supplementary service is a forwarding service, and the Media Gateway Control Function sends the notification signaling to a calling terminal.

11. A Voice Call Continuity service control entity, comprising a recording unit (73) for recording call attribute of a user,
an awareness unit (71), for identifying a notification signaling notifying that a user of a call performs a supplementary service from signaling received by the Voice Call Continuity service control entity from a Media Gateway Control Function or a Mobile Switching Center; and
a resolving unit (72), for resolving supplementary service notification content obtained from the notification signaling identified by the awareness unit (71) and thereby triggering the recording unit (73) to update the call attribute of the user according to content of the notification signaling.

12. The Voice Call Continuity service control entity according to claim 11, wherein the recording unit (73) comprises at least one of
a first partition, for recording session handover capability of a user; or
a second partition, for recording call state of a user.

13. The Voice Call Continuity service control entity according to claim 12, wherein the supplementary service notification content resolved by the resolving unit (72) comprises at least one of a service type indicator or a connected user identifier, the first partition performing at least one of updating the session handover capability recorded in the first partition according to the service type indicator, or making awareness of call forwarding information according to the connected user identifier and updating the session handover capability recorded in the first partition.

14. The Voice Call Continuity service control entity according to claim 13, wherein the first partition triggers the second partition to update the call state recorded in the second partition after the first partition updates the session handover capability of the user.

15. The Voice Call Continuity service control entity according to claim 12, wherein the supplementary service notification content resolved by the resolving unit (72) comprises at least one of a service type indicator or a connected user identifier, the second partition updates the call state recorded in the second partition according to at least one of the service type indicator or the connected user identifier.

## Patentansprüche

1. Verfahren zum Erzeugen von Bewusstheit über das Auftreten eines Ergänzungsdienstes mit den folgenden Schritten:
Erhalten (S101) einer Benachrichtigungssignalisierung von einer Media Gateway Control Function oder einer Mobilvermittlungsstelle, die benachrichtigt, dass ein Benutzer eines Anrufs einen Ergänzungsdienst durchführt, durch eine Dienststeuerentität der Voice Call Continuity;
Erzeugen (S 102) von Bewusstheit über das Auftreten des Ergänzungsdienstes gemäß der Benachrichtigungssignalisierung; und
Aktualisieren (S 103) eines Anrufattributs des Benutzers durch die Dienststeuerentität der Voice Call Continuity gemäß dem Inhalt der Benachrichtigungssignalisierung.

2. Verfahren nach Anspruch 1, wobei, wenn die Benachrichtigungssignalisierung von der Media Gateway Control Function gesendet wird, das Erhalten der Benachrichtigungssignalisierung, die benachrichtigt, dass ein Benutzer den Ergänzungsdienst durchführt, durch die Dienststeuerentität der Voice Call Continuity Folgendes umfasst:
Umsetzen einer Bündelsignalisierung, die durch die Media Gateway Control Function empfangenen Ergänzungsdienst-Benachrichtigungsinhalt enthält, in eine Benachrichtigungssignalisierung des Formats des Session Initiation Protocol durch die Media Gateway Control Function, nachdem der Benutzer den Ergänzungsdienst einleitet; und
Senden der Benachrichtigungssignalisierung des Formats des Session Initiation Protocol durch die Media Gateway Control Function zu der Dienststeuerentität der Voice Call Continuity.

3. Verfahren nach Anspruch 2, wobei der Ergänzungsdienst ein Zusammenschaltdienst ist und der Ergänzungsdienst-Benachrichtigungsinhalt eine Nummer eines neuen entgegengesetzten Endes des Anrufs umfasst;
wobei das Verfahren ferner Folgendes umfasst:
Weiterleiten der Benachrichtigungssignalisierung des Formats des Session Initiation Protocol durch die Dienststeuerentität der Voice Call Continuity zu Endgeräten neuer Teilnehmer des Anrufs; und
Erzeugen von Bewusstheit über das Auftreten des Zusammenschaltdienstes durch die Endgeräte der neuen Teilnehmer gemäß der Benachrichtigungssignalisierung des Formats des Session Initiation Protocol.

4. Verfahren nach Anspruch 2, wobei
der Ergänzungsdienst ein Weiterleitungsdienst ist, wobei das Verfahren ferner Folgendes umfasst:
Weiterleiten der Benachrichtigungssignalisierung des Formats des Session Initiation Protocol durch die Dienststeuerentität der Voice Call Continuity zu einem rufenden Endgerät; und
Erzeugen von Bewusstheit über das Auftreten des Weiterleitungsdienstes durch das rufende Endgerät gemäß der Benachrichtigungssignalisierung des Formats des Session Initiation Protocol.

5. Verfahren nach Anspruch 1, wobei der Ergänzungsdienst ein Zusammenschaltdienst oder ein Rufhaltedienst oder ein Anklopfdienst ist und das Verfahren, bevor die Dienststeuerentität der Voice Call Continuity die Benachrichtigungssignalisierung empfängt, Folgendes umfasst:
Melden einer Benachrichtigungssignalisierung, die den Ergänzungsdienst-Benachrichtigungsinhalt enthält, durch die Mobilvermittlungsstelle direkt an die Dienststeuerentität der Voice Call Continuity gemäß Subskriptionsinformationen des Benutzers.

6. Verfahren nach Anspruch 1, ferner mit den folgenden Schritten:
Erhalten (S201) der Benachrichtigungssignalisierung durch ein entgegengesetztes Ende des Anrufs, die benachrichtigt, dass der Benutzer einen Ergänzungsdienst durchführt, durch die Dienststeuerentität der Voice Call Continuity und
Erzeugen von Bewusstheit über das Auftreten des Ergänzungsdienstes gemäß der Benachrichtigungssignalisierung durch das entgegengesetzte Ende.

7. Verfahren nach Anspruch 6, wobei das Erhalten der Benachrichtigungssignalisierung, die benachrichtigt, dass ein Benutzer den Ergänzungsdienst durchführt, durch das entgegengesetzte Ende des Anrufs Folgendes umfasst:
Umsetzen (S202) einer Bündelsignalisierung, die durch die Media Gateway Control Function empfangenen Ergänzungsdienst-Benachrichtigungsinhalt enthält, durch die Media Gateway Control Function in eine Benachrichtigungssignalisierung des Formats des Session Initiation Protocol; und
Senden (S203) der Benachrichtigungssignalisierung des Formats des Session Initiation Protocol durch die Media Gateway Control Function zu der Benutzerseite des entgegengesetzten Endes des Anrufs.

8. Verfahren nach Anspruch 7, wobei der Ergänzungsdienst ein Zusammenschaltdienst ist und die Media Gateway Control Function die Benachrichtigungssignalisierung zu Endgeräten neuer Teilnehmer des Anrufs sendet.

9. Verfahren nach Anspruch 8, wobei der Ergänzungsdienst-Benachrichtigungsinhalt eine Nummer eines neuen entgegengesetzten Endes des Anrufs umfasst und einer von neuen Teilnehmern des Anrufs eine Nummer des anderen der neuen Teilnehmer gemäß dem Ergänzungsdienst-Benachrichtigungsinhalt erhält.

10. Verfahren nach Anspruch 7, wobei der Ergänzungsdienst ein Weiterleitungsdienst ist und die Media Gateway Control Function die Benachrichtigungssignalisierung zu einem rufenden Endgerät sendet.

11. Dienststeuerentität der Voice Call Continuity mit einer Aufzeichnungseinheit (73) zum Aufzeichnen eines Anrufattributs eines Benutzers,
einer Bewusstheitseinheit (71) zum Identifizieren einer Benachrichtigungssignalisierung, die benachrichtigt, dass ein Benutzer eines Anrufs einen Ergänzungsdienst durchführt, aus durch die Dienststeuerentität der Voice Call Continuity von einer Media Gateway Control Function oder einer Mobilvermittlungsstelle empfangener Signalisierung; und
einer Auflösungseinheit (72) zum Auflösen von aus der durch die Bewusstheitseinheit (71) identifizierten Benachrichtigungssignalisierung erhaltenem Ergänzungsdienst-Benachrichtigungsinhalt und **dadurch** zum Triggern der Aufzeichnungseinheit (73), das Anrufattribut des Benutzers gemäß dem Inhalt der Benachrichtigungssignalisierung zu aktualisieren.

12. Dienststeuerentität der Voice Call Continuity nach Anspruch 11, wobei die Aufzeichnungseinheit (73) mindestens eine der folgenden Alternativen umfasst:
eine erste Partition zum Aufzeichnen der Sitzungs-Handover-Fähigkeit eines Benutzers; oder
eine zweite Partition zum Aufzeichnen des Anrufzustands eines Benutzers.

13. Dienststeuerentität der Voice Call Continuity nach Anspruch 12, wobei der durch die Auflösungseinheit (72) aufgelöste Ergänzungsdienst-Benachrichtigungsinhalt einen Diensttypindikator und/oder eine Kennung des verbundenen Benutzers umfasst,
wobei die erste Partition mindestens eine der folgenden Alternativen durchführt:
Aktualisieren der in der ersten Partition aufgezeichneten Sitzungs-Handover-Fähigkeit gemäß dem Diensttypindikator oder Erzeugen von Bewusstheit über Anrufweiterleitungsinformationen gemäß der Kennung des verbundenen Benutzers und Aktualisieren der in der ersten Partition aufgezeichneten Sitzungs-Handover-Fähigkeit.

14. Dienststeuerentität der Voice Call Continuity nach Anspruch 13, wobei die erste Partition die zweite Partition triggert, den in der zweiten Partition aufgezeichneten Anrufzustand zu aktualisieren, nachdem die erste Partition die Sitzungs-Handover-Fähigkeit des Benutzers aktualisiert.

15. Dienststeuerentität der Voice Call Continuity nach Anspruch 12, wobei der durch die Auflösungseinheit (72) aufgelöste Ergänzungsdienst-Benachrichtigungsinhalt einen Diensttypindikator und/oder eine Kennung des verbundenen Benutzers umfasst und die zweite Partition den in der zweiten Partition aufgezeichneten Anrufzustand gemäß dem Diensttypindikator und/oder der Kennung des verbundenen Benutzers aktualisiert.

## Revendications

1. Procédé d'incitation de prise de conscience de l'occurrence d'un service supplémentaire, comprenant :
l'obtention (S101), à partir d'une Fonction de Commande de Passerelle de Média ou d'un Centre de Commutation de Services Mobiles, d'une signalisation de notification notifiant qu'un utilisateur d'un appel exécute un service supplémentaire par une entité de commande de service de Continuité d'Appel Vocal ;
l'incitation (S 102) de la prise de conscience de l'occurrence du service supplémentaire en fonction de la signalisation de notification ; et
l'actualisation (S 103), par l'entité de commande de service de Continuité d'Appel Vocal, d'un attribut d'appel de l'utilisateur en fonction du contenu de la signalisation de notification.

2. Procédé selon la revendication 1, dans lequel, si la signalisation de notification est envoyée par la Fonction de Commande de Passerelle de Média, l'obtention de la signalisation de notification notifiant qu'un utilisateur exécute le service supplémentaire par l'entité de commande de service de Continuité d'Appel Vocal comprend :
la conversion, par la Fonction de Commande de Passerelle de Média, d'une signalisation interurbaine contenant un contenu de notification de service supplémentaire reçu par la Fonction de Commande de Passerelle de Média en une signalisation de notification au format du Protocole de Lancement de Session après que l'utilisateur lance le service supplémentaire, et
l'envoi, par la Fonction de Commande de Passerelle de Média, de la signalisation de notification au format du Protocole de Lancement de Session à l'entité de commande de service de Continuité d'Appel Vocal.

3. Procédé selon la revendication 2, dans lequel
le service supplémentaire est un service de Transfert d'Appel Explicite, et le contenu de notification de service supplémentaire comprend un numéro d'une nouvelle extrémité opposée de l'appel ;
le procédé comprenant en outre :
le réacheminement, par l'entité de commande de service de Continuité d'Appel Vocal, de la signalisation de notification au format du Protocole de Lancement de Session à des terminaux de nouveaux correspondants de l'appel ; et
l'incitation de la prise de conscience par les terminaux des nouveaux correspondants de l'occurrence du service de Transfert d'Appel Explicite en fonction de la signalisation de notification au format du Protocole de Lancement de Session.

4. Procédé selon la revendication 2, dans lequel
le service supplémentaire est un service de réacheminement, le procédé comprenant en outre :
le réacheminement, par l'entité de commande de service de Continuité d'Appel Vocal, de la signalisation de notification au format du Protocole de Lancement de Session à un terminal appelant ; et
l'incitation de la prise de conscience par le terminal appelant de l'occurrence du service de réacheminement en fonction de la signalisation de notification au format du Protocole de Lancement de Session.

5. Procédé selon la revendication 1, dans lequel le service supplémentaire est un service de Transfert d'Appel Explicite, ou un service de garde d'appel ou un service de mise en attente d'appel, et avant que l'entité de commande de service de Continuité d'Appel Vocal ne reçoive la signalisation de notification, le procédé comprend :
la communication, par le Centre de Commutation de Services Mobiles, d'une signalisation de notification contenant le contenu de notification de service supplémentaire directement à l'entité de commande de service de Continuité d'Appel Vocal en fonction d'informations d'abonnement de l'utilisateur.

6. Procédé selon la revendication 1, comprenant en outre :
l'obtention (S201), par une extrémité opposée de l'appel, de la signalisation de notification notifiant que l'utilisateur exécute un service supplémentaire par le biais de l'entité de commande de service de Continuité d'Appel Vocal, et
l'incitation de la prise de conscience par l'extrémité opposée de l'occurrence du service supplémentaire en fonction de la signalisation de notification.

7. Procédé selon la revendication 6, dans lequel l'obtention de la signalisation de notification notifiant qu'un utilisateur exécute le service supplémentaire par l'extrémité opposée de l'appel comprend :
la conversion (S202), par la Fonction de Commande de Passerelle de Média, d'une signalisation interurbaine contenant un contenu de notification de service supplémentaire reçu par la Fonction de Commande de Passerelle de Média en une signalisation de notification au format du Protocole de Lancement de Session ; et
l'envoi (S203), par la Fonction de Commande de Passerelle de Média, de la signalisation de notification au format du Protocole de Lancement de Session au côté utilisateur de l'extrémité opposée de l'appel.

8. Procédé selon la revendication 7, dans lequel le service supplémentaire est un service de Transfert d'Appel Explicite, et la Fonction de Commande de Passerelle de Média envoie la signalisation de notification à des terminaux de nouveaux correspondants de l'appel.

9. Procédé selon la revendication 8, dans lequel le contenu de notification de service supplémentaire comprend un numéro d'une nouvelle extrémité opposée de l'appel, l'un des nouveaux correspondants de l'appel obtient un numéro de l'autre des nouveaux correspondants en fonction du contenu de notification de service supplémentaire.

10. Procédé selon la revendication 7, dans lequel : le service supplémentaire est un service de réacheminement, et la Fonction de Commande de Passerelle de Média envoie la signalisation de notification à un terminal appelant.

11. Entité de commande de service de Continuité d'Appel Vocal, comprenant une unité d'enregistrement (73) pour enregistrer un attribut d'appel d'un utilisateur,
une unité de prise de conscience (71), pour identifier une signalisation de notification notifiant qu'un utilisateur d'un appel effectue un service supplémentaire à partir d'une signalisation reçue par l'entité de commande de service de Continuité d'Appel Vocal depuis une Fonction de Commande de Passerelle de Média ou un Centre de Commutation de Services Mobiles ; et
une unité de résolution (72), pour résoudre le contenu de notification de service supplémentaire obtenu de la signalisation de notification identifiée par l'unité de prise de conscience (71) et ainsi déclencher l'unité d'enregistrement (73) pour actualiser l'attribut d'appel de l'utilisateur en fonction du contenu de la signalisation de notification.

12. Entité de commande de service de Continuité d'Appel Vocal selon la revendication 11, dans laquelle l'unité d'enregistrement (73) comprend au moins l'une
d'une première partition, pour enregistrer une capabilité de transfert de session d'un utilisateur ; ou
d'une seconde partition, pour enregistrer l'état d'appel d'un utilisateur.

13. Entité de commande de service de Continuité d'Appel Vocal selon la revendication 12, dans laquelle le contenu de notification de service supplémentaire résolu par l'unité de résolution (72) comprend au moins l'un d'un indicateur de type de service ou d'un identifiant d'utilisateur connecté, la première partition exécutant au moins l'une d'une actualisation de la capabilité de transfert de session enregistrée dans la première partition en fonction de l'indicateur de type de service, ou d'une incitation de prise de conscience d'informations de réacheminement d'appel en fonction de l'identifiant de l'utilisateur connecté et d'une actualisation de la capabilité de transfert de session enregistrée dans la première partition.

14. Entité de commande de service de Continuité d'Appel Vocal selon la revendication 13, dans laquelle la première partition déclenche la seconde partition pour actualiser l'état d'appel enregistré dans la seconde partition après que la première partition actualise la capabilité de transfert de session de l'utilisateur.

15. Entité de commande de service de Continuité d'Appel Vocal selon la revendication 12, dans laquelle le contenu de notification de service supplémentaire résolu par l'unité de résolution (72) comprend au moins l'un d'un indicateur de type de service ou d'un identifiant d'utilisateur connecté, la seconde partition actualisant l'état d'appel enregistré dans la seconde partition en fonction d'au moins l'un de l'indicateur de type de service ou de l'identifiant de l'utilisateur connecté.
